# EUROPEAN PATENT SPECIFICATION

(11) **EP 2 311 239 B1**
(45) Date of publication and mention of the grant of the patent: **01.08.2012**
(21) Application number: 09749913.1
(22) Date of filing: 22.05.2009
(51) Int. Cl.: H04L 29/08, G06Q 30/00, H04W 4/14, H04L 12/18, H04L 12/58

(54) **METHOD AND ARRANGEMENT FOR SCHEDULING THE TRANSMISSION OF MESSAGES**
VERFAHREN UND ANORDNUNG ZUM PLANEN DES ABLAUFS DER ÜBERTRAGUNG VON NACHRICHTEN
PROCÉDÉ ET AGENCEMENT DE PROGRAMMATION DE TRANSMISSION DE MESSAGES

(30) Priority: 22.05.2008 GB 0809318; 22.05.2008 US 55256
(43) Date of publication of application: 20.04.2011
(73) Proprietor: Apple Inc., Cupertino, CA 95014 (US)
(72) Inventor: AHOPELTO, Timo, FI-00140 Helsinki (FI); MALINEN, Jouni, FI-02710 Espoo (FI)
(74) Representative: Barton, Russell Glen
(86) International application number: PCT/EP2009/056217
(87) International publication number: WO 2009/141423

(56) References cited:
- EP-A1- 0 955 589
- WO-A1-00/62564
- GB-A- 2 440 990
- US-A1- 2001 008 404
- US-A1- 2003 074 256
- US-A1- 2005 055 426
- US-A1- 2005 186 940
- US-A1- 2006 277 308
- US-B1- 6 845 396

## Description

### Field of the Invention

The invention relates generally to a method and arrangement for scheduling transmission of messages targeted to one or more subscribers of a communication network. Furthermore, the invention relates to a server apparatus, a database, an article of manufacture, and a computer program for scheduling transmission of messages targeted to one or more subscribers of a communication network.

### Background

Conventional methods for delivering advertisement data typically involve broadcasting messages to mass markets. This is usually described as a "Spray and Pray" approach, wherein the advertisement data is delivered to a wide audience and it is hoped that the advertisement data will be received by a sufficient number of potential consumers that are appropriate targets of the advertisement. Although an advertiser may take steps to ensure that the advertisement data is delivered via channels that traditionally are expected to reach a significant concentration of potential consumers, there is nevertheless little or no means to guarantee that the advertisement data is delivered to most appropriate recipients. An example of conventional mass marketing strategy is delivery of advertisement data through television channels and inclusion of the advertising data into commonly visited Internet websites.

Direct mailing campaigns via traditional mail and via electronic mail are considered to be more accurate in delivering advertisement information to targeted individuals and/or groups. In addition to the conventional electronic mail it is possible to use other electronic message delivery means for delivery of advertisement data, for example SMS-messages (Short Message Service) or MMS-messages (Multi Media Service) that can be delivered via a mobile communication network. Sending advertisement messages to subscribers of a mobile communication network in a large scale causes often a lot of so called "dead pings", i.e. messages targeted to subscribers whose communication devices, e.g. mobile phones, are not present in the mobile communication network and thus not reachable via the mobile communication network. The transmission of the advertisement messages could be scheduled in such a manner that the above-mentioned dead pings could be avoided if a sender or senders of the advertisement messages were aware of current statuses of presence of the communication devices of subscribers. In a mobile communication network a HLR (Home Location Register) is an element maintaining presence information about communication devices of subscribers. Therefore, the HLR would be a natural place to query the current status of presence of a communication device of each subscriber. However, excessive number of queries may lead to high load in the HLR and possibly also in other network elements and thus potentially affect negatively to overall network performance. Furthermore, transmissions at such times that may be inconvenient from the viewpoint of subscribers should be avoided even if the communication devices of the subscribers were reachable during those times.

Prior art documents US 2005/186940 and US 2001/008404 are concerned with collecting user activity data to improve the timeliness of delivering (advertising) messages.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to the more detailed description below.

The invention is defined by independant apparatus claim 1 and corresponding claims 8 and 15, relating to a method and a machine readable medium, respectively.

In accordance with at least one embodiment of the invention, a method, an arrangement, a server apparatus, a database, an article of manufacture, and a computer program are provided for supporting and/or implementing functionality for scheduling transmission of messages targeted to one or more subscribers of a communication network, wherein the scheduling is at least partly based on statistical characteristics of behaviour of the subscribers. The statistical characteristics of the behaviour of the subscribers are based at least partly on temporal history of activity of the subscribers in the communication network. The supporting and/or the implementation of the functionality for scheduling the transmission of the messages to the subscribers are/is achieved by a combination of features recited in each independent claim. Accordingly, dependent claims prescribe further detailed implementations of the present invention.

Various exemplifying embodiments of the invention together with additional objects and advantages will be best understood from the following description of specific embodiments when read in connection with the accompanying drawings.

The exemplifying embodiments of the invention presented in this document are not to be interpreted to pose limitations to the applicability of the appended claims. The verb "to comprise" is used in this document as an open limitation that does not exclude the existence of also unrecited features. The features recited in depending claims are mutually freely combinable unless otherwise explicitly stated.

### Brief Description of the Figures

The exemplifying embodiments of the invention and their advantages are explained in greater detail below with reference to the accompanying drawings, in which:
Figure 1 shows an arrangement according to an embodiment of the invention for scheduling transmission of messages to subscribers of a communication network;
Figure 2 shows a server apparatus according to an embodiment of the invention for scheduling transmission of messages to subscribers of a communication network;
Figure 3 shows a flow chart of a method according to an embodiment of the invention for scheduling transmission of messages to subscribers of a communication network; and
Figure 4 shows a flow chart of a method according to an embodiment of the invention for scheduling transmission of messages to subscribers of a communication network.

### Description of the Exemplifying Embodiments

An arrangement according to an embodiment of the invention for scheduling transmission of messages targeted to one or more subscribers of a communication network comprises: (i) means for querying information about activity of the subscribers, (ii) means for forming statistical characteristics for the behaviour of the subscribers at least partly on the basis of the information about the activity of the subscribers, the statistical characteristics of the behaviour of the subscribers being based at least partly on temporal history of the activity of the subscribers and being arranged to indicate for each subscriber a value of probability whether that subscriber is active at a given instant of time, (iii) means for transmitting the messages to the communication network, and (iv) means for scheduling the transmission of the messages at least partly on the basis of the statistical characteristics of the behaviour of the subscribers. The statistical characteristics of behaviour of the subscribers can be used for reducing a number of messages that are targeted to subscribers not accessible via the communication network at a given time and/or for avoiding transmissions at times that are inappropriate or inconvenient from the viewpoint of a subscriber.

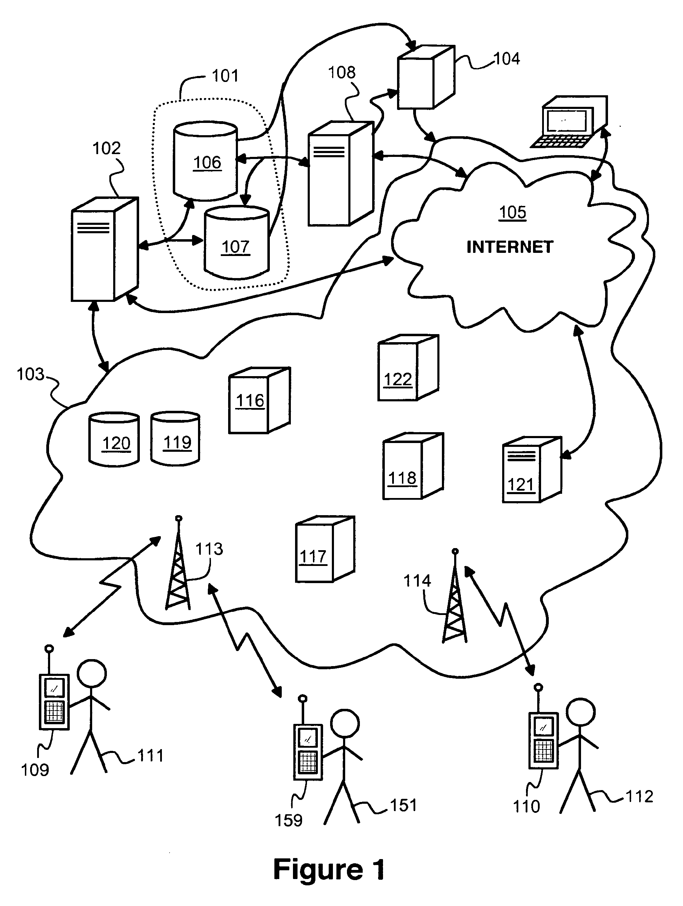

Figure 1 shows an arrangement according to an embodiment of the invention for scheduling transmission of messages targeted to one or more subscribers of a communication network 103. The arrangement comprises an analyser 102 that is arranged to query information about activity of the subscribers from the communication network. The analyser can be arranged, for example, to determine a given subscriber e.g. 111, 151, or 112 to be active for a given time instant as a response to at least one of the following situations:
a) the information about the activity of the subscribers indicates that a communication device e.g. 109, 159, or 110 of that subscriber has transmitted payload data to the communication network at that time instant;
b) the information about the activity of the subscribers indicates that the communication device of that subscriber is accessible (reachable) via the communication network at that time instant, e.g. a mobile phone is present in a mobile communication network;
c) the information about the activity of the subscribers indicates that the communication device of that subscriber is connected, at that time instant, via a data transfer link to a pre-determined part of the communication network, e.g. a mobile phone is connected via a radio link to a certain cell of a mobile communication network; and
d) the information about the activity of the subscribers indicates that a query message delivered to that subscriber has been responded by that subscriber; the query message can be, for example, a part of an advertisement message related to an advertising campaign.

It should be noted, however, that the above-mentioned situations are just examples and the activity of the subscribers can be defined in many other ways too.

The analyser 102 is arranged to form statistical characteristics of the behaviour of the subscribers at least partly on the basis of the information about the activity of the subscribers. The statistical characteristics of the behaviour of the subscribers are based at least partly on temporal history of the activity of the subscribers and the statistical characteristics are arranged to indicate for each subscriber a value of probability whether that subscriber is active at a given instant of time. The value of the probability can be expressed, for example, with a numerical value P belonging to a pre-determined numerical range; e.g. 0 ≤ P ≤ 1 or 0 % ≤ P ≤ 100 %. The value of the probability can as well be expressed with an element of a finite group of ordered elements, the value of the probability associated with each element being indicated by a position of that element with respect to other elements of the group. For example, letters (a, b, c, ...) may constitute a finite group of ordered elements. It is possible to define e.g. that a later position in the alphabetical order represents a higher value of the probability than an earlier position in the alphabetical order.

The analyser 102 is preferably arranged to query the information about the activity of the subscribers repetitively and to update the statistical characteristics of the behaviour of the subscribers in order to make the statistical characteristics of the behaviour of the subscribers to change along with changes in the real behaviour of the subscribers. The analyser can be arranged to query to the information about the activity of the subscribers, for example, once an hour or some other suitable time interval.

The arrangement comprises a transmitter 104 capable of transmitting messages targeted to one or more of the subscribers to the communication network. The arrangement comprises a server 108 arranged to schedule transmission of the messages to the subscribers at least partly on the basis of the statistical characteristics of the behaviour of the subscribers. In addition to the statistical characteristics of the behaviour of the subscribers, also other information can be used in the scheduling of the transmission of the messages. For example, it might not be meaningful to transmit messages that advertise a slalom center if the weather is not appropriate for skiing, i.e. information about e.g. the prevailing weather could also be used in the scheduling of the transmission of the messages. The arrangement comprises memory equipment 101 that is preferably arranged to store the statistical characteristics of the behaviour of the subscribers. Alternatively, the gathered information about the activity of the subscribers can be stored into the memory equipment 101 and the statistical characteristics of the behaviour of the subscribers can be formed at each time when the statistical characteristics of the behaviour of the subscribers are needed. The solution in which the statistical characteristics of the behaviour of the subscribers are formed at each time when needed requires, however, more computational capacity than the solution in which the statistical characteristics of the behaviour of the subscribers are stored into the memory equipment. The analyser 102, the transmitter 104, and the server 108 can be realized as a single device, or they can be separate interconnected devices, or two of them can be realized as a single device that is connected to a device representing one of them. The memory equipment 101 can be composed of one or more memory units 106, 107 that can be physically located in a centralised or distributed manner.

The statistical characteristics of the behaviour of the subscribers can be defined in many different ways and certain examples are given below. The examples given below are not to be interpreted to pose limitations to the applicability of the principle of using the statistical characteristics of the behaviour of the subscribers in conjunction with scheduling transmission of messages targeted to one or more of the subscribers.

In an arrangement according to an embodiment of the invention, the statistical characteristics of the behaviour of the subscribers are values indicating proportion of active subscribers i.e. proportion of those subscribers that have been active during pre-determined time slots of a repetitive time period that can be e.g. a day, a week, a month or even a year or a longer period such as an Olympiad. The pre-determined time slots can be, for example, successive time intervals that have a same pre-determined temporal length. In order to achieve statistical reliability, the proportion of active subscribers is preferably detected for the pre-determined time slots for several repetitive time periods, e.g. for several days, weeks, months, etc. Table 1 shows exemplifying information about the activity of the subscribers 111 and 112 in a situation in which the repetitive time period is a day, the pre-determined time slots are successive time intervals having a temporal length of two hours, and the information about the activity of the subscribers 111 and 112 has been collected for three days.

**Table 1. Exemplifying information about the activity of the subscriber devices (y = active, n = not active, S = Subscriber).**

| Time of day | | am | | | | | | pm | | | | | |
|---|---|---|---|---|---|---|---|---|---|---|---|---|---|
| | | 0-2 | 2-4 | 4-6 | 6-8 | 8-10 | 10-12 | 12-2 | 2-4 | 4-6 | 6-8 | 8-10 | 10-12 |
| Day 1 | S 111 | n | n | n | y | y | y | y | y | y | y | y | y |
| | S 112 | n | n | n | n | n | n | y | y | y | y | y | y |
| Day 2 | S 111 | n | n | y | y | y | y | n | y | y | y | y | n |
| | S 112 | n | n | n | n | n | n | n | y | y | y | y | n |
| Day 3 | S 111 | n | n | n | n | y | y | y | y | y | y | y | n |
| | S 112 | n | n | n | n | y | y | y | y | y | y | y | n |

Table 2. shows exemplifying values that indicate the proportion of active subscribers for the two hours time slots. The exemplifying values of Table 2 are calculated on the basis of the exemplifying information shown in Table 1.

**Table 2. Exemplifying values [%] indicating the proportion of active subscribers.**

| Time of day | am | | | | | | pm | | | | | |
|---|---|---|---|---|---|---|---|---|---|---|---|---|
| | 0-2 | 2-4 | 4-6 | 6-8 | 8-10 | 10-12 | 12-2 | 2-4 | 4-6 | 6-8 | 8-10 | 10-12 |
| Proportion | 0 | 0 | 17 | 33 | 67 | 67 | 67 | 100 | 100 | 100 | 100 | 33 |

In this exemplifying situation, messages targeted to the subscribers 111 and 112 are preferably scheduled to be transmitted between 2 pm and 10 pm, because during that time interval the proportion of active subscribers is highest.

In an arrangement according to an embodiment of the invention, the statistical characteristics of the behaviour of the subscribers are values indicating probability of activity of each subscriber for pre-determined time slots of a repetitive time period. Table 3 shows exemplifying values that indicate the probability of activity of each subscriber for the two hours time slots. The exemplifying values of Table 3 are calculated on the basis of the exemplifying information shown in Table 1.

**Table 3. Exemplifying values [%] indicating the probability of activity of each subscriber (S = subscriber).**

| Time of day | am | | | | | | pm | | | | | |
|---|---|---|---|---|---|---|---|---|---|---|---|---|
| | 0-2 | 2-4 | 4-6 | 6-8 | 8-10 | 10-12 | 12-2 | 2-4 | 4-6 | 6-8 | 8-10 | 10-12 |
| S 111 | 0 | 0 | 33 | 67 | 100 | 100 | 67 | 100 | 100 | 100 | 100 | 33 |
| S 112 | 0 | 0 | 0 | 0 | 33 | 33 | 67 | 100 | 100 | 100 | 100 | 33 |

In this exemplifying situation, messages targeted to the subscriber 111 are preferably scheduled to be transmitted between 8 am and noon or between 4 pm and 10 pm, and messages targeted to the subscriber 112 are preferably scheduled to be transmitted between 2 pm and 10 pm.

In an arrangement according to an embodiment of the invention, the statistical characteristics of the behaviour of the subscribers are values indicating probability of activity of each subscriber for a repetitive time period. Table 4 shows exemplifying information about the activity of the subscribers 111, 151, and 112 in a situation in which the repetitive time period is a day and the information about the activity of the subscribers 111, 151, and 112 has been collected with spot checks during successive days of a month.

**Table 4. Exemplifying information about the activity of the subscriber devices (S = Subscriber).**

| | | |
|---|---|---|
| Day 1 | S 111 | Activity is checked with 24 spot checks during the day, the subscriber S 111 has been detected to be active in 12 of the spot checks. |
| | S 112 | Activity is checked with 24 spot checks during the day, the subscriber S 112 has been detected to be active in 2 of the spot checks. |
| | S 151 | Activity is checked with 24 spot checks during the day, the subscriber S 112 has been detected to be active in 15 of the spot checks. |
| Day 2 | S 111 | Activity is checked with 24 spot checks during the day, the subscriber S 111 has been detected to be active in 15 of the spot checks. |
| | S 112 | Activity is checked with 24 spot checks during the day, the subscriber S 112 has been detected to be active in 4 of the spot checks. |
| | S 151 | Activity is checked with 24 spot checks during the day, the subscriber S 112 has been detected to be active in 8 of the spot checks. |
| . . . | . . . | . . . |
| Day 31 | S 111 | Activity is checked with 24 spot checks during the day, the subscriber S 111 has been detected to be active in 11 of the spot checks. |
| | S 112 | Activity is checked with 24 spot checks during the day, the subscriber S 112 has been detected to be active in 1 of the spot checks. |
| | S 151 | Activity is checked with 24 spot checks during the day, the subscriber S 112 has been detected to be active in 17 of the spot checks. |

Table 5 shows exemplifying values that indicate probability of activity of the subscribers 111, 151 and 112 for different days of a month. The exemplifying values that are shown in Table 5 and are related to days 1, 2, and 31 are calculated on the basis of the exemplifying information shown in Table 4.

**Table 5. Exemplifying values [%] indicating the probability of activity of each subscriber within a month (S = subscriber).**

| | S 111 | S 112 | S151 |
|---|---|---|---|
| Day 1 | 50 % | 8% | 63 % |
| Day 2 | 63 % | 17 % | 33 % |
| Day 3 | 54 % | | |
| Day 4 | | | |
| . . . | . . . | . . . | . . . |
| Day 12 | 76% | 67 % | 3% |
| Day 13 | 45 % | 36% | 7% |
| Day 14 | 56% | 45 % | 4% |
| Day 15 | 80% | 56% | 4% |
| Day 16 | 75 % | 45 % | 5% |
| . . . | . . . | . . . | . . . |
| Day 28 | 67 % | 3% | 56% |
| Day 29 | 45 % | 7% | 33 % |
| Day 30 | 47 % | 4% | 54 % |
| Day 31 | 46% | 4% | 71 % |

In this exemplifying situation, messages targeted to the subscribers 111 and 112 are preferably scheduled to be transmitted at a middle of a month instead of the beginning or the end of the month, and messages targeted to the subscribers 111 and 151 are preferably scheduled to be transmitted at the beginning or at the end of the month instead of the middle of the month.

Each value of the probability shown in Table 5 is calculated as a ratio of a number of spot checks in which a subscriber was active to a total number (24) of the spot checks within a day. In order to mitigate the effect of occasional, short term activities of the subscribers it is also possible to detect a longest time interval during which no spot check manifests inactivity and to define the values of the probability as a ratio of a temporal length of the said longest time interval to the total length of a day (24 hours). In an arrangement according to an embodiment of the invention, the server 108 is arranged to select from among the subscribers of the communication network 103 those subscribers for which the value of the probability of activity is higher than a pre-determined limit value. The server is arranged to schedule those messages that are targeted to the selected subscribers to be transmitted in the vicinity of a time instant to which the above-mentioned value of the probability is related. For example, in the exemplifying situation related to Table 5, messages targeted to the subscribers 111 and 151 could be transmitted at day 1 and messages targeted to the subscribers 111 and 112 could be transmitted at day 12 if the pre-determined limit value for the probability were 49 %.

In an arrangement according to an embodiment of the invention, the server 108 is arranged to select from among the subscribers of the communication network 103 those subscribers for which the value of the probability is lower than a pre-determined limit value. The server is arranged to schedule those messages that are targeted to the selected subscribers to be transmitted in the vicinity of a time instant to which the above-mentioned value of the probability is related. The purpose of the messages that are transmitted in spite of a poor probability of activity can be, for example, to activate subscribers that are usually inactive at the time of the transmissions.

In an arrangement according to an embodiment of the invention, the server 108 is arranged to select from among the subscribers of the communication network 103 a pre-determined number of subscribers in a decreasing order of the values of the probability related to the subscribers. The server is arranged to schedule those messages that are targeted to the selected subscribers to be transmitted in the vicinity of a time instant to which the above-mentioned values of the probability are related. For example, in the exemplifying situation related to Table 5, the subscribers 111 and 151 would be selected at day 1 and the subscribers 111 and 112 wound be selected at day 12 if the pre-determined number of subscribers to be selected were 2.

In an arrangement according to an embodiment of the invention, the server 108 is arranged to select from among the subscribers of the communication network 103 subscribers in a decreasing order of the values of the probability related to the subscribers until a sum of the values of the probability related to those subscribers that have been selected reaches a pre-determined target value. The server is arranged to schedule those messages that are targeted to the selected subscribers to be transmitted in the vicinity of a time instant to which the above-mentioned values of the probability are related. The sum of the values of the probability related to the selected subscribers represents an expectation value of a number of active subscribers. For example, if the probability of activity is 50 % for each subscriber at a certain time instant one have to transmit messages to at least 2N subscribers in order that the expectation value of the number of the active subscribers would be at least N at the said time instant.

In an arrangement according to an embodiment of the invention, the subscribers have been classified and the server 108 and the analyser 102 are arranged to identify each subscriber to belong to one of pre-determined subscriber-classes. The analyser is arranged to form, for each subscriber-class, a portion of the statistical characteristics of the behaviour of the subscribers that is specific to that subscriber-class. Therefore, there is no need to form subscriber specific statistical characteristics for every subscriber separately and, on the other hand, the quality of scheduling of messages is better than in a case in which same statistical characteristics are used for all subscribers. The subscribers can be classified e.g. on the basis of age, profession, education, marital status and/or other demographic data about the subscribers. The subscriber-classes are preferably defined in a manner that same messages can be targeted to all subscribers of a certain subscriber class and deliveries of a certain message to subscribers of a certain subscriber class can take place simultaneously. A new subscriber can be included into one of the pre-determined subscriber classes and, therefore, the arrangement is capable of scheduling transmission of messages targeted to only this new subscriber also before any information about activity of this new subscriber has been collected. The statistical characteristics of the behaviour of the subscribers can be, for example, values indicating subscriber-class specific probability of activity for a repetitive time period (e.g. a day, a week, etc.) or for pre-determined time slots of a repetitive time period (e.g. hours of a day, days of a week, etc.). For each subscriber-class, the subscriber-class specific probability of activity may represent e.g. an average value for probabilities of activity of individual subscribers belonging to that subscriber-class. The statistical characteristics of the behaviour of the subscribers can also be, for example, subscriber-class specific proportions of those subscribers of a subscriber class which have been active during a repetitive time period or during pre-determined time slots of a repetitive time period.

In an arrangement according to an embodiment of the invention, the statistical characteristics of the behaviour of the subscribers are based, in addition to the temporal history of the activity of the subscribers, on pre-defined behaviour patterns of the subscribers. A pre-defined behaviour pattern concerns preferably a certain group of subscribers, e.g. a certain subscriber-class if the subscribers have been classified. For example, if a subscriber is an unmarried city dweller it is more probable that the subscriber is more active during evenings than during mornings. The assumption about activity on evenings instead of on mornings can be used as a single component of a behaviour pattern of subscribers that are unmarried city dwellers. The behaviour patterns can be used for correcting and/or tuning the statistical characteristics of the behaviour of the subscribers based on the monitored temporal history of the activity of the subscribers.

In an arrangement according to an embodiment of the invention, the statistical characteristics of the behaviour of the subscribers include recorded values of time instants when the subscribers have last been active in the communication network during an elapsed repetitive time period that can be e.g. a day, a week, a month or even a year or a longer period such as an Olympiad. Therefore, for each subscriber the recorded value of the time instant can be e.g. time of day, time at certain day-of-week, time at certain date, etc. For example, if the subscriber 111 has last been active at 10 pm during an elapsed day, the subscriber 111 might be active around 10 pm also during next days. Therefore, the recorded value 10 pm represents information that can be used in parallel with a piece of the statistical characteristics that indicates a value of probability whether the subscriber 111 is active at a 10 pm.

In an arrangement according to an embodiment of the invention, the communication network 103 comprises a mobile communication network that is preferably a cellular mobile network. The communication network can be capable of supporting, for example, one or more of the following communication protocols: GSM (Global System Mobile), WCDMA (Wideband Code Division Multiple Access), GPRS (General Packet Radio Service). In addition to or instead of the mobile communication network, a local area network such as a Wireless Local area network (WLAN) or BlueTooth® (BT) and/or other technologies such as WiMax, Broadcasting over DVB-H (Digital Video Broadcasting - Handhelds), ISDB-T (Integrated Services Digital Broadcasting for Terrestrial television broadcasting), DMB (Digital Media Broadcasting) or broadcasting over cellular can be used to deliver messages to the subscribers. The communication network 103 can be also a combination of two or more technologies i.e. hybrid communication network. The communication network can also be arranged to support generic Internet access using any transport methods.

The communication network 103 can comprise network elements such as a home location register (HLR) 119, call detail records (CDR) 120, a short message service centre (SMSC) 116, a multimedia message service center (MMSC) 117, a wireless application protocol gateway (WAPGW) 118, and a gateway 121 arranged to provide access to internet services provided with the aid of the Internet 105. An operator of the mobile communication network may provide a presence server 122 that is arranged to maintain information about accessibility of the communication devices of the subscribers via the communication network. In addition, the communication network 103 can comprise elements such as billing system (not shown), base stations 113, 114 and other elements, interfaces and functions needed to operate the communication network.

The communication device 109 of the subscriber 111 and also the communication device 110 of the subscriber 112 can be, for example, a mobile communication device such as a mobile phone, a smart phone, a personal digital assistant (PDA), a personal computer (PC), a laptop or a multimedia computer. Typically these communication devices have capability to communicate with one or more different type of communication networks and have messaging capabilities in form of messaging client such as short message service (SMS) client or electronic mail client or multimedia message service client embedded in the communication device. The communication devices 109 and 110 can also have browser to access the Web-services and/or to WAP-services (Wireless Application Protocol).

In an arrangement according to an embodiment of the invention, the analyser 102 is arranged to query the information about the activity of the subscribers from those network elements of the mobile communication network which network elements are, possibly case-specifically, configured to gather activity information about the subscribers.

In an arrangement according to an embodiment of the invention, the analyser 102 is arranged to query the information about the activity of the subscribers from at least one of the following: the HLR 119 (Home Location Register), the CDR 120 (Call Detail Records), and the presence server 122.

In an arrangement according to an embodiment of the invention, the server 108 is integrated into one of the following: the SMSC 116, the MMSC 117, an IMS-server (an intelligent messaging system server), an IM-system (instant messaging), and an electronic mail server.

In an arrangement according to an embodiment of the invention, the messages targeted to one or more of the subscribers comprise at least one of the following: an SMS-message (Short Message Service), an MMS-message (Multi Media Service), an IP-datagram (Internet Protocol), and an email letter (electronic mail).

A database according to an embodiment of the invention includes statistical characteristics of behaviour of subscribers of a communication network, wherein the statistical characteristics of the behaviour of the subscribers are based at least partly on temporal history of activity of the subscribers in the communication network and the statistical characteristics of the behaviour of the subscribers are arranged to indicate for each subscriber a value of probability whether that subscriber is active at a given instant of time. The above-presented Tables 2, 3 and 5 show exemplifying contents of databases according embodiments of the invention.

In a database according to an embodiment of the invention, the statistical characteristics of the behaviour of the subscribers is based, in addition to the temporal history of the activity of the subscribers, on pre-defined behaviour patterns of pre-determined subscriber-classes, each subscriber belonging to one of the pre-determined subscriber-classes.

Memory equipment according to an embodiment of the invention is arranged to store a database including statistical characteristics of behaviour of subscribers of a communication network, wherein the statistical characteristics of the behaviour of the subscribers are based at least partly on temporal history of activity of the subscribers in the communication network and the statistical characteristics are arranged to indicate for each subscriber a value of probability whether that subscriber is active at a given instant of time.

Memory equipment according to an embodiment of the invention is arranged store a database, wherein the statistical characteristics of the behaviour of the subscribers is based, in addition to the temporal history of the activity of the subscribers, on pre-defined behaviour patterns of pre-determined subscriber-classes, each subscriber belonging to one of the pre-determined subscriber-classes.

A server apparatus according to an embodiment of the invention for scheduling transmission of messages targeted to one or more subscribers of a communication network comprises: means for scheduling the transmission of the messages at least partly on the basis of statistical characteristics of behaviour of the subscribers, the statistical characteristics of the behaviour of the subscribers being based at least partly on temporal history of activity of the subscribers in the communication network and the statistical characteristics being arranged to indicate for each subscriber a value of probability whether that subscriber is active at a given instant of time.

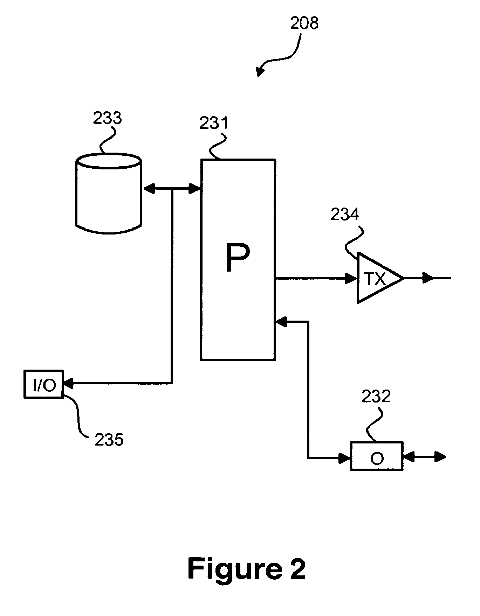

Figure 2 shows a server apparatus 208 according to an embodiment of the invention for scheduling transmission of messages targeted to one or more subscribers of a communication network. A message targeted to one or more subscribers can be a SMS-message (Short Message Service), an MMS-message (Multi Media Service), an IP-datagram (Internet Protocol), or an email letter (electronic mail). The server apparatus comprises a processor 231 arranged to schedule the transmission of the messages at least partly on the basis of the statistical characteristics of the behaviour of the subscribers. A piece of the statistical characteristics of the behaviour of the subscribers is arranged to indicate a value of probability whether a subscriber or subscribers related to that piece of the statistical characteristics is/are active at a given instant of time. The value of the probability can be expressed, for example, with a numerical value P belonging to a pre-determined numerical range; e.g. 0 ≤ P ≤ 1 or 0 % ≤ P ≤ 100 %. The value of the probability can as well be expressed with an element of a finite group of ordered elements so that the value of the probability associated with each element is indicated by a position of that element with respect to other elements of the group. For example, letters (a, b, c, ...) may constitute a finite group of ordered elements. It is possible to define e.g. that a later position in the alphabetical order represents a higher value of the probability than an earlier position in the alphabetical order. The statistical characteristics of the behaviour of the subscribers can be, for example:
- values indicating proportion of those subscribers that have been active during a repetitive time period or during pre-determined time slots of a repetitive time period; and/or
- values indicating probability of activity of each subscriber for a repetitive time period or for pre-determined time slots of a repetitive time period.

The statistical characteristics of the behaviour of the subscribers can further include recorded values of time instants when the subscribers have last been active in the communication network during an elapsed repetitive time period.

If the subscribers have been classified, the statistical characteristics of the behaviour of the subscribers can be, for example:
- values indicating proportion of those subscribers of a certain subscriber-class that have been active during a repetitive time period or during pre-determined time slots of a repetitive time period; and/or
- values indicating probability of activity for subscribers of a certain subscriber-class for a repetitive time period or for pre-determined time slots of a repetitive time period; for each subscriber-class the probability of activity can be e.g. an average value for probabilities of activity of individual subscribers belonging to that subscriber-class.

The repetitive time period can be, for example, a day, a week, a month, or even a year or a longer period as an Olympiad. Furthermore, the statistical characteristics of the behaviour of the subscribers can be based, in addition to the temporal history of the activity of the subscribers, on pre-defined behaviour patterns of the subscribers.

In a server apparatus according to an embodiment of the invention, the processor 231 is arranged to select from among the subscribers of the communication network those subscribers for which the value of the probability is higher than a pre-determined limit value. The processor is arranged to schedule those messages that are targeted to the selected subscribers to be transmitted in the vicinity of a time instant to which the above-mentioned value of the probability is related.

In a server apparatus according to an embodiment of the invention, the processor 231 is arranged to select from among the subscribers of the communication network those subscribers for which the value of the probability is lower than a pre-determined limit value. The processor is arranged to schedule those messages that are targeted to the selected subscribers to be transmitted in the vicinity of a time instant to which the above-mentioned value of the probability is related.

In a server apparatus according to an embodiment of the invention, the processor 231 is arranged to select from among the subscribers of the communication network a pre-determined number of subscribers in a decreasing order of the values of the probability related to the subscribers. The processor is arranged to schedule those messages that are targeted to the selected subscribers to be transmitted in the vicinity of a time instant to which the above-mentioned values of the probability are related.

In a server apparatus according to an embodiment of the invention, the processor 231 is arranged to select from among the subscribers of the communication network subscribers in a decreasing order of the values of the probability related to the subscribers until a sum of the values of the probability related to those subscribers that have been selected reaches a pre-determined target value. The processor is arranged to schedule those messages that are targeted to the selected subscribers to be transmitted in the vicinity of a time instant to which the above-mentioned values of the probability are related.

A server apparatus according to an embodiment of the invention comprises a transmission interface 234 capable of transmitting messages to a communication network. In a server apparatus according to another embodiment of the invention, the processor is arranged to send a transmission order via an output interface 232 to an external device in order to make the external device to transmit a message to the communication network. The transmission order can include either the message or a pointer with the aid of which the external device can retrieve the message from e.g. memory equipment. The external device can be such as the transmitter 104 shown in figure 1. The server may further comprise an interface unit that is arranged to connect the server apparatus to the Internet.

The server apparatus 208 can be a single device within a single housing or it can comprise several interconnected devices. The processor 231 can be a single processor unit or the processor 231 can comprise several processor units that can be physically located in a centralized manner or in a distributed manner.

A server apparatus according to an embodiment of the invention comprises an input-output interface 235 for connecting to an external device such as the analyser 102 shown in figure 1. In this embodiment of the invention, the processor 231 is arranged read the statistical characteristics of the behaviour of the subscribers from the external device.

In a server apparatus according to another embodiment of the invention, the processor 231 is arranged:
- to query information about the activity of the subscribers; and
- to form the statistical characteristics of the behaviour of the subscribers at least partly on the basis of the information about the activity of the subscribers.

The processor is preferably arranged to query the information about the activity of the subscribers repetitively and to update the statistical characteristics of the behaviour of the subscribers in order to make the statistical characteristics of the behaviour of the subscribers to change along with changes in the real behaviour of the subscribers. The processor can be arranged to query to the information about the activity of the subscribers, for example, once an hour or some other suitable time interval.

In a server apparatus according to an embodiment of the invention, the processor 231 is arranged to form the statistical characteristics of the behaviour of the subscribers on the basis of the information about the activity of the subscribers and on the basis of pre-defined behaviour patterns of the subscribers. The behaviour patterns can be used for correcting and/or tuning the statistical characteristics of the behaviour of the subscribers based on the information about the activity of the subscribers.

In conjunction with forming the statistical characteristics of the behaviour of the subscribers, the processor 231 can be arranged to consider a given subscriber to be active for a given time instant as a response to at least one of the following situations:
a) the information about the activity of the subscribers indicates that a communication device of that subscriber has transmitted payload data to the communication network at that time instant;
b) the information about the activity of the subscribers indicates that the communication device of that subscriber is accessible via the communication network at that time instant;
c) the information about the activity of the subscribers indicates that the communication device of that subscriber is connected at that time instant via a data transfer link to a pre-determined part of the communication network; and
d) the information about the activity of the subscribers indicates that a query message delivered to that subscriber has been responded by that subscriber.

It should be noted, however, that the above-mentioned situations are just examples and the activity of the subscribers can be defined in many other ways too.

In a server apparatus according to an embodiment of the invention the processor 231 is arranged to write the formed statistical characteristics of the behaviour of the subscribers into memory equipment. Alternatively, the information about the activity of the subscribers can be written into the memory equipment and the statistical characteristics of the behaviour of the subscribers can be formed at each time when the statistical characteristics of the behaviour of the subscribers are needed. The solution in which the statistical characteristics of the behaviour of the subscribers are formed at each time when needed requires, however, more computational capacity than the solution in which the statistical characteristics of the behaviour of the subscribers are stored. The server apparatus can comprise a memory element 233 and/or the server apparatus can be arranged to use external memory equipment (not shown) via the input-output interface 235.

In a server apparatus according to an embodiment of the invention, the processor 231 is arranged to identify each subscriber to belong to one of pre-determined subscriber-classes and each subscriber-class is related to a portion of the statistical characteristics of the behaviour of the subscribers that is specific to that subscriber-class. Therefore, there is no need to handle subscriber specific statistical characteristics for every subscriber separately and, on the other hand, the quality of scheduling of messages is better than in a case in which same statistical characteristics are used for all subscribers.

In a server apparatus according to another embodiment of the invention, the processor 231 is arranged to query the information about the activity of the subscribers from network elements of a mobile communication network which network elements are configured, possibly case-specifically, to gather activity information about the subscribers.

In a server apparatus according to an embodiment of the invention, the processor 231 is arranged to query the information about the activity of the subscribers from least one of the following: a HLR (Home Location Register) of a mobile communication network, a CDR (Call Detail Records) of the mobile communication network, and a presence server of an operator of the mobile communication network.

In a server apparatus according to an embodiment of the invention, the transmission interface 234 is arranged to support at least one of the following communication protocols: GSM (Global System Mobile), WCDMA (Wideband Code Division Multiple Access), GPRS (General Packet Radio Service).

In a server apparatus according to an embodiment of the invention, the transmission interface 234 is arranged to support at least one of the following communication protocols: WLAN (Wireless Local Area Network), BlueTooth®, and Wimax.

A server apparatus according to an embodiment of the invention is integrated into one of the following: a SMSC (a short message service centre), a MMSC (a multimedia message service center), an IMS-server (an intelligent messaging system server), an IM-system (instant messaging), and an electronic mail server.

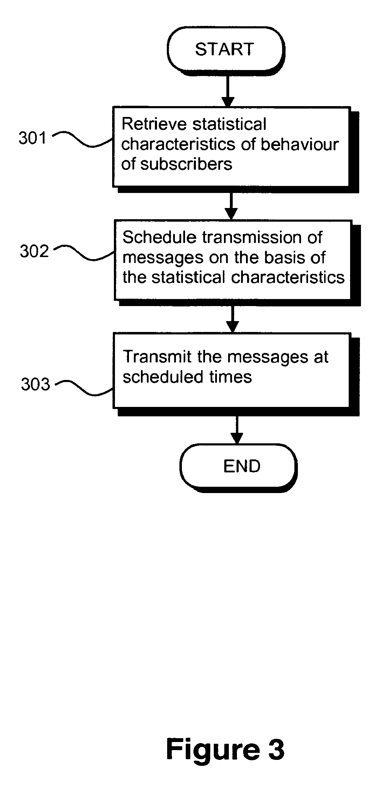

Figure 3 shows a flow chart of a method according to an embodiment of the invention for scheduling transmission of messages targeted to one or more subscribers of a communication network. A phase 301 comprises retrieving statistical characteristics of behaviour of the subscribers, the statistical characteristics of the behaviour of the subscribers being based at least partly on temporal history of activity of the subscribers in the communication network and being arranged to indicate for each subscriber a value of probability whether that subscriber is active at a given instant of time. A phase 302 comprises scheduling transmission of the messages at least partly on the basis of the statistical characteristics of the behaviour of the subscribers. A phase 303 comprises transmitting the messages at scheduled times. The statistical characteristics of the behaviour of the subscribers can be retrieved from local memory equipment and/or from an external device.

In a method according to an embodiment of the invention, the above-mentioned value of the probability is expressed with a numerical value belonging to a pre-determined numerical range.

In a method according to an embodiment of the invention, the value of probability is expressed with an element of a finite group of ordered elements, the value of probability associated with each element being indicated by a position of that element with respect to other elements of the group.

In a method according to an embodiment of the invention, those subscribers for which the value of the probability is higher than a pre-determined limit value are selected from among the subscribers of the communication network, and those messages that are targeted to the selected subscribers are scheduled to be transmitted in the vicinity of a time instant to which the above-mentioned value of the probability is related.

In a method according to an embodiment of the invention, those subscribers for which the value of the probability is lower than a pre-determined limit value are selected from among the subscribers of the communication network, and those messages that are targeted to the selected subscribers are scheduled to be transmitted in the vicinity of a time instant to which the above-mentioned value of the probability is related.

In a method according to an embodiment of the invention, a pre-determined number of subscribers are selected from among the subscribers of the communication network in a decreasing order of the values of the probability related to the subscribers, and those messages that are targeted to the selected subscribers are scheduled to be transmitted in the vicinity of a time instant to which the above-mentioned values of the probability are related.

In a method according to an embodiment of the invention, subscribers are selected from among the subscribers of the communication network in a decreasing order of the values of the probability related to the subscribers until a sum of the values of the probability related to those subscribers that have been selected reaches a pre-determined target value, and those messages that are targeted to the selected subscribers are scheduled to be transmitted in the vicinity of a time instant to which the above-mentioned values of the probability are related.

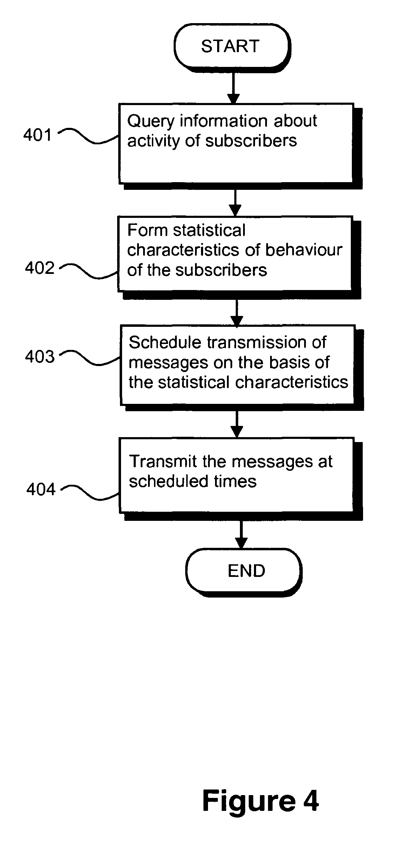

Figure 4 shows a flow chart of a method according to an embodiment of the invention for scheduling transmission of messages targeted to one or more subscribers of a communication network. A phase 401 comprises querying information about the activity of the subscribers. A phase 402 comprises forming statistical characteristics of behaviour of the subscribers at least partly on the basis of the information about the activity of the subscribers. A phase 403 comprises scheduling transmission of the messages at least partly on the basis of the statistical characteristics of the behaviour of the subscribers. A phase 404 comprises transmitting the messages at scheduled times.

In a method according to an embodiment of the invention, in conjunction with forming the statistical characteristics in the phase 402, a subscriber is determined to be active for a given time instant as a response to at least one of the following situations: a) the information about the activity of the subscribers indicates that a communication device of that subscriber has transmitted payload data to the communication network at that time instant, b) the information about the activity of the subscribers indicates that the communication device of that subscriber is accessible via the communication network at that time instant, c) the information about the activity of the subscribers indicates that the communication device of that subscriber is connected at that time instant via a data transfer link to a pre-determined part of the communication network, and d) the information about the activity of the subscribers indicates that a query message delivered to that subscriber has been responded by that subscriber.

It should be noted, however, that the above-mentioned situations are just examples and the activity of the subscribers can be defined in many other ways too.

The information about the activity of the subscribers is preferably queried (the phase 401) repetitively and the statistical characteristics of the behaviour of the subscribers is preferably updated (the phase 402) in order to make the statistical characteristics of the behaviour of the subscribers to change along with changes in the real behaviour of the subscribers. The information about the activity of the subscribers can be queried, for example, once an hour or some other suitable time interval.

In a method according to an embodiment of the invention, the statistical characteristics of the behaviour of the subscribers include recorded values of time instants when the subscribers have last been active in the communication network during an elapsed repetitive time period that can be, for example, a day, a week, a month, or a year.

In a method according to an embodiment of the invention, the statistical characteristics of the behaviour of the subscribers are values indicating proportion of those subscribers that have been active during a repetitive time period or during pre-determined time slots of a repetitive time period. The said values can be based on e.g. a plurality of spot checks carried out within a repetitive time period.

In a method according to an embodiment of the invention, the statistical characteristics of the behaviour of the subscribers are values indicating probability of activity of each subscriber for a repetitive time period or for pre-determined time slots of a repetitive time period. The said values can be based on e.g. a plurality of spot checks carried out within a repetitive time period.

In a method according to an embodiment of the invention, each subscriber is identified to belong to one of pre-determined subscriber-classes and each subscriber-class is related to a portion of the statistical characteristics of the behaviour of the subscribers that is specific to that subscriber-class.

In a method according to an embodiment of the invention, the statistical characteristics of the behaviour of the subscribers are values indicating, for each subscriber class, proportion of those subscribers within that subscriber class which have been active during a repetitive time period or during pre-determined time slots of a repetitive time period.

In a method according to an embodiment of the invention, the statistical characteristics of the behaviour of the subscribers are values indicating, for each subscriber class and for a repetitive time period, average probability of activity of individual subscribers belonging to that subscriber class.

In a method according to an embodiment of the invention, the statistical characteristics of the behaviour of the subscribers are values indicating, for each subscriber class and for pre-determined time slots of a repetitive time period, average probability of activity of individual subscribers belonging to that subscriber class.

In a method according to an embodiment of the invention, the statistical characteristics of the behaviour of the subscribers is based, in addition to the temporal history of the activity of the subscribers, on pre-defined behaviour patterns of the subscribers.

A method according to an embodiment of the invention comprises querying (the phase 401) the information about the activity of the subscribers from network elements of a mobile communication network which network elements are configured, possibly case-specifically, to gather activity information about the subscribers.

A method according to an embodiment of the invention comprises querying (the phase 401) the information about the activity of the subscribers from least one of the following: a HLR (Home Location Register) of a mobile communication network, a CDR (Call Detail Records) of the mobile communication network, and a presence server of an operator of the mobile communication network.

In a method according to an embodiment of the invention, at least one of the following communication protocols is used for transmitting (the phase 303 or 404) the messages to the subscribers: GSM (Global System Mobile), WCDMA (Wideband Code Division Multiple Access), GPRS (General Packet Radio Service), BlueTooth®, and Wimax.

In a method according to an embodiment of the invention, transmission orders are sent via an output interface to an external device in order to make the external device to transmit the messages to the subscribers.

In a method according to an embodiment of the invention, the messages comprise at least one of the following: a SMS-message (Short Message Service), an MMS-message (Multi Media Service), an IP-datagram (Internet Protocol), and an email letter (electronic mail).

A computer program product according to an embodiment of the invention comprises computer executable instructions for making a programmable processor to schedule transmission of messages targeted to one or more subscribers of a communication network at least partly on the basis of statistical characteristics of behaviour of the subscribers, the statistical characteristics of the behaviour of the subscribers being based at least partly on temporal history of activity of the subscribers in the communication network and being arranged to indicate for each subscriber a value of probability whether that subscriber is active at a given instant of time.

A computer program product according to an embodiment of the invention further comprises:
- computer executable instructions for making the programmable processor to query information about the activity of the subscribers; and
- computer executable instructions for making the programmable processor to form the statistical characteristics of the behaviour of the subscribers at least partly on the basis of the information about the activity of the subscribers.

The computer program product comprises preferably computer executable instructions for making the programmable processor to query the information about the activity of the subscribers repetitively and to update the statistical characteristics of the behaviour of the subscribers in order to make the statistical characteristics of the behaviour of the subscribers to change along with changes in the real behaviour of the subscribers.

For example, the processor 231 of the server apparatus 208 shown in figure 2 can represent the above-mentioned programmable processor.

The computer executable instructions can be e.g. subroutines and/or functions.

A computer program product according to an embodiment of the invention is stored in a computer readable medium. The computer readable medium can be e.g. a CD-ROM (Compact Disc Read Only Memory) or a RAM-device (Random Access Memory).

A computer program product according to an embodiment of the invention is carried in a signal that is receivable from a communication network, e.g. Internet.

An article of manufacture according to an embodiment of the invention for scheduling transmission of messages targeted to one or more subscribers of a communication network comprises a machine readable medium. The machine readable medium contains one or more computer programs which, when executed, implement the scheduling of the transmission of the messages at least partly on the basis of statistical characteristics of behaviour of the subscribers, the statistical characteristics of the behaviour of the subscribers being based at least partly on temporal history of activity of the subscribers in the communication network and being arranged to indicate for each subscriber a value of probability whether that subscriber is active at a given instant of time.

## Claims

1. A server apparatus comprising a processor arranged to schedule transmission of messages targeted to a plurality of subscribers of a communication network at least partly on the basis of statistical characteristics of behaviour of the subscribers, the statistical characteristics of the behaviour of the subscribers being based at least partly on temporal history of activity of the subscribers in the communication network **characterised by** being arranged to indicate for each subscriber a value of probability whether that subscriber is active at a given instant of time, wherein the processor is arranged to select from among the subscribers of the communication network in a decreasing order in accordance with said values of probability until a sum of said values of probability related to those subscribers that have been selected reaches a predetermined target value, and the processor is arranged to schedule those messages that are targeted to the selected subscribers to be transmitted in the vicinity of the given instant of time.

2. A server apparatus according to claim 1, wherein the value of the probability is a numerical value belonging to a pre-determined numerical range.

3. A server apparatus according to claim 1, wherein the value of probability is an element of a finite group of ordered elements, the value of probability associated with each element being indicated by a position of that element with respect to other elements of the group.

4. A server apparatus according to claim 1, wherein the processor is arranged:
- to query information about the activity of the subscribers, and
- to form the statistical characteristics of the behaviour of the subscribers at least partly on the basis of the information about the activity of the subscribers.

5. A server apparatus according to claim 4, wherein the processor is arranged to determine a given subscriber to be active for a given time instant as a response to at least one of the following situations: a) the information about the activity of the subscribers indicates that a communication device of that subscriber has transmitted payload data to the communication network at that time instant, b) the information about the activity of the subscribers indicates that the communication device of that subscriber is accessible via the communication network at that time instant, c) the information about the activity of the subscribers indicates that the communication device of that subscriber is connected at that time instant via a data transfer link to a pre-determined part of the communication network, and d) the information about the activity of the subscribers indicates that a query message delivered to that subscriber has been responded by that subscriber.

6. A server apparatus according to claim 1, wherein the statistical characteristics of the behaviour of the subscribers are values indicating probability of activity of each subscriber for pre-determined time slots of a repetitive time period.

7. A server apparatus according to claim 1, wherein the statistical characteristics of the behaviour of the subscribers are values indicating probability of activity of each subscriber for a repetitive time period, said values being based on a plurality of spot checks carried out within the repetitive time period.

8. A method for operating a server apparatus comprising scheduling transmission of messages targeted to a plurality of subscribers of a communication network at least partly on the basis of statistical characteristics of behaviour of the subscribers, the statistical characteristics of the behaviour of the subscribers being based at least partly on temporal history of activity of the subscribers in the communication network **characterised by** indicating for each subscriber a value of probability whether that subscriber is active at a given instant of time, wherein subscribers are selected from among the subscribers of the communication network in a decreasing order in accordance with said values of probability until a sum of said values of probability (see claim 1) reaches a pre-determined target value, and those messages that are targeted to the selected subscribers are scheduled to be transmitted in the vicinity of the given instant of time.

9. A method according to claim 8, wherein the value of the probability is expressed with a numerical value belonging to a pre-determined numerical range.

10. A method according to claim 8, wherein the value of probability is expressed with an element of a finite group of ordered elements, the value of probability associated with each element being indicated by a position of that element with respect to other elements of the group.

11. A method according to claim 8, comprising:
- querying information about the activity of the subscribers , and
- forming the statistical characteristics of the behaviour of the subscribers at least partly on the basis of the information about the activity of the subscribers.

12. A method according to claim 11, wherein a given subscriber is determined to be active for a given time instant as a response to at least one of the following situations: a) the information about the activity of the subscribers indicates that a communication device of that subscriber has transmitted payload data to the communication network at that time instant, b) the information about the activity of the subscribers indicates that the communication device of that subscriber is accessible via the communication network at that time instant, c) the information about the activity of the subscribers indicates that the communication device of that subscriber is connected at that time instant via a data transfer link to a pre-determined part of the communication network, and d) the information about the activity of the subscribers indicates that a query message delivered to that subscriber has been responded by that subscriber.

13. A method according to claim 8, wherein the statistical characteristics of the behaviour of the subscribers are values indicating probability of activity of each subscriber for pre-determined time slots of a repetitive time period.

14. A method according to claim 8, wherein the statistical characteristics of the behaviour of the subscribers are values indicating probability of activity of each subscriber for a repetitive time period, said values being based on a plurality of spot checks carried out within the repetitive time period.

15. A machine readable medium containing one or more computer programs which, when executed, implement the method according to any one of claims 8-14.

## Patentansprüche

1. Servervorrichtung mit einem Prozessor, der eingerichtet ist zum Planen der Übertragung von Nachrichten, die gezielt an eine Mehrzahl von Teilnehmern eines Kommunikationsnetzwerks zumindest teilweise auf der Grundlage der statistischen Eigenschaften des Verhaltens der Teilnehmer gerichtet sind, wobei die statistischen Eigenschaften des Verhaltens der Teilnehmer zumindest teilweise auf einem zeitlichen Verlauf der Aktivität der Teilnehmer in dem Kommunikationsnetzwerk basiert sind,
**gekennzeichnet durch**
Eingerichtetsein, um für jeden Teilnehmer einen Wahrscheinlichkeitswert anzugeben, ob jener Teilnehmer zu einem gegebenen Zeitpunkt aktiv ist, wobei der Prozessor eingerichtet ist, um aus den Teilnehmern des Kommunikationsnetzes in einer absteigenden Reihenfolge in Übereinstimmung mit den Wahrscheinlichkeitswerten auszuwählen bis eine Summe der Wahrscheinlichkeitswerte, die bezogen ist auf jene Teilnehmer, die ausgewählt worden sind, einen vorbestimmten Zielwert erreicht, und der Prozessor eingerichtet ist, um jene Nachrichten zu planen, die gezielt ausgerichtet sind auf die ausgewählten Teilnehmer, um in der Nähe des gegebenen Zeitpunkts übertragen zu werden.

2. Servervorrichtung nach Anspruch 1, wobei der Wahrscheinlichkeitswert ein numerischer Wert ist, der zu einem vorbestimmten numerischen Bereich gehört.

3. Servervorrichtung nach Anspruch 1, wobei der Wahrscheinlichkeitswert ein Element einer endlichen Gruppe von geordneten Elementen ist, wobei der mit jedem Element assoziierte Wahrscheinlichkeitswert durch eine Position jenes Elements mit Bezug zu anderen Elementen der Gruppe angegeben wird.

4. Servervorrichtung nach Anspruch 1, wobei der Prozessor eingerichtet ist:
Information über die Aktivität der Teilnehmer abzufragen, und
die statistischen Eigenschaften des Verhaltens der Teilnehmer zumindest teilweise auf der Grundlage der Information über die Aktivität der Teilnehmer zu bilden.

5. Servervorrichtung nach Anspruch 4, wobei der Prozessor eingerichtet ist zum Bestimmen eines gegebenen Teilnehmers für einen gegebenen Zeitpunkt aktiv zu sein als Reaktion auf mindestens eine der folgenden Situationen:
a) die Information über die Aktivität der Teilnehmer weist darauf hin, dass ein Kommunikationsgerät jenes Teilnehmers Nutzdaten an das Kommunikationsnetz zu jenem Zeitpunkt übertragen hat,
b) die Information über die Aktivität der Teilnehmer gibt an, dass das Kommunikationsgerät jenes Teilnehmers zu jenem Zeitpunkt zugänglich über das Kommunikationsnetzwerk ist,
c) die Information über die Aktivität der Teilnehmer gibt an, dass das Kommunikationsgerät jenes Teilnehmers zu jenem Zeitpunkt über eine Datenübertragungsverbindung mit einem vorbestimmten Teil des Kommunikationsnetzwerks verbunden ist, und
d) die Information über die Aktivität der Teilnehmer angibt, dass eine an jenen Teilnehmer gelieferte Abfrage-Nachricht von jenem Teilnehmer beantwortet worden ist.

6. Servervorrichtung nach Anspruch 1, wobei die statistischen Eigenschaften des Verhaltens der Teilnehmer Werte sind, die eine Wahrscheinlichkeit einer Aktivität jedes Teilnehmers für vorbestimmte Zeitschlitze einer sich wiederholenden Zeitperiode angeben.

7. Servervorrichtung nach Anspruch 1, wobei die statistischen Eigenschaften des Verhaltens der Teilnehmer Werte sind, die eine Wahrscheinlichkeit der Aktivität jedes Teilnehmers für eine sich wiederholende Zeitperiode angeben, wobei die Werte auf einer Mehrzahl von Stichproben basiert sind, die innerhalb der sich wiederholenden Zeitperiode ausgeführt werden.

8. Verfahren zum Betreiben einer Servervorrichtung, aufweisend ein Planen zum Übertragung von Nachrichten, die gezielt an eine Mehrzahl von Teilnehmern eines Kommunikationsnetzwerks zumindest teilweise auf der Grundlage der statistischen Eigenschaften des Verhaltens der Teilnehmer gerichtet sind, wobei die statistischen Eigenschaften des Verhaltens der Teilnehmer zumindest teilweise auf einem zeitlichen Verlauf der Aktivität der Teilnehmer in dem Kommunikationsnetzwerk basiert sind,
**gekennzeichnet durch**
Angeben eines Wahrscheinlichkeitswerts für jeden Teilnehmer, ob jener Teilnehmer zu einem gegebenen Zeitpunkt aktiv ist, wobei Teilnehmer aus den Teilnehmern des Kommunikationsnetzwerks in einer absteigenden Reihenfolge in Übereinstimmung mit den Wahrscheinlichkeitswerten ausgewählt werden bis eine Summe der Wahrscheinlichkeitswerte, die bezogen ist auf jene Teilnehmer, die ausgewählt worden sind, einen vorbestimmten Zielwert erreicht, und jene Nachrichten, die gezielt ausgerichtet sind auf die ausgewählten Teilnehmer, werden geplant, um in der Nähe des gegebenen Zeitpunkts übertragen zu werden.

9. Verfahren nach Anspruch 8, wobei der Wahrscheinlichkeitswert mit einem numerischen Wert ausgedrückt wird, der zu einem vorbestimmten numerischen Bereich gehört.

10. Verfahren nach Anspruch 8, wobei der Wahrscheinlichkeitswert mit einem Element einer endlichen Gruppe von geordneten Elementen ausgedrückt wird, wobei der mit jedem Element assoziierte Wahrscheinlichkeitswert durch eine Position jenes Elements mit Bezug zu anderen Elementen der Gruppe angegeben wird.

11. Verfahren nach Anspruch 8, aufweisend:
Abfragen von Information über die Aktivität der Teilnehmer, und
Bilden der statistischen Eigenschaften des Verhaltens der Teilnehmer zumindest teilweise auf der Grundlage der Information über die Aktivität der Teilnehmer.

12. Verfahren nach Anspruch 11, wobei ein gegebener Teilnehmer bestimmt wird für einen gegebenen Zeitpunkt aktiv zu sein als Reaktion auf mindestens eine der folgenden Situationen:
a) die Information über die Aktivität der Teilnehmer weist darauf hin, dass ein Kommunikationsgerät jenes Teilnehmers Nutzdaten an das Kommunikationsnetz zu jenem Zeitpunkt übertragen hat,
b) die Information über die Aktivität der Teilnehmer gibt an, dass das Kommunikationsgerät jenes Teilnehmers zu jenem Zeitpunkt zugänglich über das Kommunikationsnetzwerk ist,
c) die Information über die Aktivität der Teilnehmer gibt an, dass das Kommunikationsgerät jenes Teilnehmers zu jenem Zeitpunkt über eine Datenübertragungsverbindung mit einem vorbestimmten Teil des Kommunikationsnetzwerks verbunden ist, und
d) die Information über die Aktivität der Teilnehmer angibt, dass eine an jenen Teilnehmer gelieferte Abfrage-Nachricht von jenem Teilnehmer beantwortet worden ist.

13. Verfahren nach Anspruch 8, wobei die statistischen Eigenschaften des Verhaltens der Teilnehmer Werte sind, die eine Wahrscheinlichkeit einer Aktivität jedes Teilnehmers für vorbestimmte Zeitschlitze einer sich wiederholenden Zeitperiode angeben.

14. Verfahren nach Anspruch 8, wobei die statistischen Eigenschaften des Verhaltens der Teilnehmer Werte sind, die eine Wahrscheinlichkeit der Aktivität jedes Teilnehmers für eine sich wiederholende Zeitperiode angeben, wobei die Werte auf einer Mehrzahl von Stichproben basiert sind, die innerhalb der sich wiederholenden Zeitperiode ausgeführt werden.

15. Maschinenlesbares Medium, das ein oder mehrere Computerprogramme enthält, das, wenn es ausgeführt wird, das Verfahren nach irgend einem der Ansprüche 8 bis 14 implementiert.

## Revendications

1. Un dispositif serveur comprenant un processeur configuré pour planifier l'émission de messages ciblés en direction d'une pluralité d'abonnés d'un réseau de communication au moins partiellement sur la base de caractéristiques statistiques de comportement des abonnés, les caractéristiques statistiques du comportement des abonnés étant basées au moins partiellement sur un historique temporel de l'activité des abonnés sur le réseau de communication, **caractérisé en ce qu'**il est configuré pour indiquer pour chaque abonné une valeur de probabilité que cet abonné soit ou non actif à un instant temporel donné, le processeur étant configuré pour opérer une sélection parmi les abonnés du réseau de communication en un ordre décroissant en fonction desdites valeurs de probabilité jusqu'à ce qu'une somme desdites valeurs de probabilité relatives à ceux des abonnés qui ont été sélectionnés atteigne une valeur cible prédéterminée, et le processeur est configuré pour planifier l'émission à proximité de l'instant temporel donné de ceux des messages qui sont ciblés en direction des abonnés sélectionnés.

2. Un dispositif serveur selon la revendication 1, dans lequel la valeur de probabilité est une valeur numérique appartenant à une plage numérique prédéterminée.

3. Un dispositif serveur selon la revendication 1, dans lequel la valeur de probabilité est un élément d'un groupe fini d'éléments ordonnés, la valeur de probabilité associée à chaque élément étant indiquée par une position de cet élément par rapport aux autres éléments du groupe.

4. Un dispositif serveur selon la revendication 1, dans lequel le processeur est configuré :
- pour demander à obtenir des informations concernant l'activité des abonnés, et
- pour former les caractéristiques statistiques du comportement des abonnés au moins partiellement sur la base des informations concernant l'activité des abonnés.

5. Un dispositif serveur selon la revendication 4, dans lequel le processeur est configuré pour déterminer qu'un abonné donné est actif à un instant temporel donné comme étant une réponse à au moins l'une des situations suivantes : a) les informations concernant l'activité des abonnés indiquent qu'un dispositif de communication de cet abonné a émis des données de charge utile vers le réseau de communication à cet instant temporel, b) les informations concernant l'activité des abonnés indiquent que le dispositif de communication de cet abonné est accessible via le réseau de communication à cet instant temporel, c) les informations concernant l'activité des abonnés indiquent que le dispositif de communication de cet abonné est relié à cet instant temporel via une liaison de transfert de données à une partie prédéterminée du réseau de communication, et d) les informations concernant l'activité des abonnés indiquent qu'un message de demande délivré à cet abonné a reçu une réponse provenant de cet abonné.

6. Un dispositif serveur selon la revendication 1, dans lequel les caractéristiques statistiques du comportement des abonnés sont des valeurs indiquant une probabilité d'activité de chaque abonné pendant des créneaux temporels prédéterminés d'une période temporelle répétitive.

7. Un dispositif serveur selon la revendication 1, dans lequel les caractéristiques statistiques du comportement des abonnés sont des valeurs indiquant une probabilité d'activité de chaque abonné pendant une période temporelle répétitive, lesdites valeurs étant basées sur une pluralité de contrôles isolés opérés à l'intérieur de la période temporelle répétitive.

8. Un procédé d'exploitation d'un dispositif serveur comprenant la planification de l'émission de messages ciblés en direction d'une pluralité d'abonnés d'un réseau de communication au moins partiellement sur la base de caractéristiques statistiques de comportement des abonnés, les caractéristiques statistiques du comportement des abonnés étant basées au moins partiellement sur un historique temporel de l'activité des abonnés sur le réseau de communication, **caractérisé par** l'indication pour chaque abonné d'une valeur de probabilité que cet abonné soit ou non actif à un instant temporel donné, les abonnés étant sélectionnés parmi les abonnés du réseau de communication en un ordre décroissant en fonction desdites valeurs de probabilité jusqu'à ce qu'une somme desdites valeurs de probabilité relatives à ceux des abonnés qui ont été sélectionnés atteigne une valeur cible prédéterminée, et ceux des messages qui sont ciblés en direction des abonnés sélectionnés étant planifiés pour être émis à proximité de l'instant temporel donné.

9. Un procédé selon la revendication 8, dans lequel la valeur de probabilité est exprimée par une valeur numérique appartenant à une plage numérique prédéterminée.

10. Un procédé selon la revendication 8, dans lequel la valeur de probabilité est exprimée par une un élément d'un groupe fini d'éléments ordonnés, la valeur de probabilité associée à chaque élément étant indiquée par une position de cet élément par rapport aux autres éléments du groupe.

11. Un procédé selon la revendication 8, comprenant :
- une demande d'obtention d'informations concernant l'activité des abonnés, et
- la formation des caractéristiques statistiques du comportement des abonnés au moins partiellement sur la base des informations concernant l'activité des abonnés.

12. Un procédé selon la revendication 11, dans lequel on détermine qu'un abonné donné est actif à un instant temporel donné comme étant une réponse à au moins l'une des situations suivantes : a) les informations concernant l'activité des abonnés indiquent qu'un dispositif de communication de cet abonné a émis des données de charge utile vers le réseau de communication à cet instant temporel, b) les informations concernant l'activité des abonnés indiquent que le dispositif de communication de cet abonné est accessible via le réseau de communication à cet instant temporel, c) les informations concernant l'activité des abonnés indiquent que le dispositif de communication de cet abonné est relié à cet instant temporel via une liaison de transfert de données à une partie prédéterminée du réseau de communication, et d) les informations concernant l'activité des abonnés indiquent qu'un message de demande délivré à cet abonné a reçu une réponse provenant de cet abonné.

13. Un procédé selon la revendication 8, dans lequel les caractéristiques statistiques du comportement des abonnés sont des valeurs indiquant une probabilité d'activité de chaque abonné pendant des créneaux temporels prédéterminés d'une période temporelle répétitive.

14. Un procédé selon la revendication 8, dans lequel les caractéristiques statistiques du comportement des abonnés sont des valeurs indiquant une probabilité d'activité de chaque abonné pendant une période temporelle répétitive, lesdites valeurs étant basées sur une pluralité de contrôles isolés opérés à l'intérieur de la période temporelle répétitive.

15. Un support lisible par machine contenant un ou plusieurs programmes informatiques qui, lorsqu'ils sont exécutés, mettent en oeuvre le procédé selon l'une des revendications 8 à 14.
